# EUROPÄISCHE PATENTSCHRIFT

(11) **EP 0 616 130 B1**
(45) Veröffentlichungstag und Bekanntmachung des Hinweises auf die Patenterteilung: **30.07.1997**
(21) Anmeldenummer: 94105761.4
(22) Anmeldetag: 14.04.1994
(51) Int. Cl.: F04C 2/10, F04C 15/00, F16C 17/00

(54) **Fördermediumgeschmierte Gleitlager für eine Zahnradpumpe**
Sliding bearing for a gear pump lubricated by the working fluid
Palier lisse pour une pompe à engrenages lubrifié par de liquide pompé

(43) Veröffentlichungstag der Anmeldung: 21.09.1994
(73) Patentinhaber: Maag Pump Systems AG, CH-8023 Zürich (CH)
(72) Erfinder: Blume, Peter, CH-8051 Zürich (CH); Stehr, Roger, Dr.-Ing., CH-8180 Bülach (CH)
(74) Vertreter: Troesch Scheidegger Werner AG

(56) Entgegenhaltungen:
- EP-A- 0 161 644
- EP-A- 0 310 292
- DE-C- 318 189
- US-A- 4 460 893

## Beschreibung

Die vorliegende Erfindung betrifft ein Verfahren nach dem Oberbegriff von Anspruch 1 sowie eine Zahnradpumpe nach demjenigen von Anspruch 5.

Produktegeschmierte Gleitlager müssen stets ausreichend mit dem von der Zahnradpumpe geförderten Fördergut versorgt werden. Hierzu gehört es zum Stande der Technik, eine Schmiernut im wesentlichen axial in die Innenoberfläche der Gleitlagerbohrung einzuarbeiten. Hierzu sei z. B. verwiesen auf "Gleitlager", springer Verlag, Berlin, Heidelberg, N. York, 1978, S. 376.

Der Lastvektor ist bei derartigen Gleitlagern nach Betrag genau bekannt, nach Lage nur genähert. Je nach Betriebszustand ist dabei der Lastvektor verschieden. Er ist abhängig von vielen Betriebsparametern, so insbesondere von der Drehzahl der Pumpe, der aktuellen Viskosität des Fördergutes im Lager und von der Lagerlast.

Gemäss Lagertheorie (s. z.B. "Gleitlager", s. 153 ff) baut sich in Umfangsrichtung eine Drucküberhöhung im Fördergut-gefüllten Lagerspalt auf, welche das Gleichgewicht zur Lagerlast bei einer sich einstellenden Exzentrizität des Lagerzapfens in der Lagerbohrung hält. Wenn durch hohe Lagerlast oder durch niedrige viskosität, z.B. wegen hoher Lagertemperatur, die Exzentrizität des Lagerzapfens in der Lagerbohrung zunimmt, verschiebt sich zusätzlich, und relativ zur Lage des Lastvektors, die Stelle der geringsten Lagerspalthöhe in Drehrichtung des Zapfens. Damit wird die Strecke zwischen Förderguteinspeisung in den Lagerspalt - an der Einlaufkante der Schmiernut - und dem Bereich der geringsten Spalthöhe, in Drehrichtung betrachtet, grösser.

Auf der verlängerten Strecke ist die Zeitspanne grösser, während welcher das schmierende Fördergut geschert wird. Damit erwärmt sich letzteres im Lagerspalt zusätzlich, so dass seine Viskosität sinkt, mit der Folge geringerer Tragfähigkeit.

Anderseits darf die Schmiernut nicht zu nahe am Bereich der geringsten Spaltweite liegen, da zum Aufbau der Drucküberhöhung eine gewisse Spaltumfangsstrecke nötig ist.

Aus der EP-A-310 292 ist es bekannt im Lastvektorbereich in der Lagerbüchse eine Schmiermedium beaufschlagte Schmiernut vorzusehen und dort den Lagerspalt mittels auf die Welle wirkender Stellnocken einzustellen.

Aus der US-4 460 893 ist es bekannt auftretende Lager-Trokkenreibung an einem Gleitlager durch Temperaturmessung zu erfassen.

In der EP-A-0 161 644 ist beschrieben, wie örtlich die Temperatur in der Gleitschicht eines Gleitlagers erfasst werden kann.

Es ist Aufgabe der vorliegenden Erfindung, ein Verfahren bzw. eine Zahnradpumpe zu schaffen, bei welchen die relative Lage zwischen Schmiernut und betriebsabhängiger Lage des Bereichs geringster Lagerspaltweite während des Betriebes beeinflusst werden kann.

Zu diesem Zweck zeichnet sich das Verfahren eingangs genannter Art nach dem kennzeichnenden Teil von Anspruch 1 aus.

Dadurch, dass die Schwenklage der Schmiernut verstellbar ist, ergibt sich die Möglichkeit, auch während des Zahnradpumpenbetriebes den Winkelabstand zwischen Schmiernut und Bereich kleinsten Lagerspaltes optimal einzustellen.

Da die Lagertemperatur, über die Viskosität des als Schmiermedium verwendeten Fördermediums, ein Mass ist für die zwischen Schmiernut und besagten Bereich schmälsten Lagerspaltes auf das Schmiermedium wirkenden Scherkräfte ist, wird, gemäss Wortlaut von Anspruch 2, vorgeschlagen, die Lagertemperatur als gemessene Regelgrösse zu erfassen und nach Vergleich mit einem entsprechenden SOLL-Wert, nach Massgabe des Vergleichsresultates, in regelndem Sinne auf die Schwenklage der Schmiernut einzugreifen.

Dabei ist es in einer bevorzugten Ausführungsvariante nach dem Wortlaut von Anspruch 3 möglich, die Schwenklage in Funktion der Pumpendrehzahl und/oder der Einlauf/Auslauf-Druckdifferenz über der Zahnradpumpe zu stellen, im Falle des geregelten Betriebes nach Anspruch 2 beispielsweise den SOLL-Wert mit der Pumpendrehzahl bzw. besagter Druckdifferenz zu führen.

In einer weiteren bevorzugten Ausführungsvariante des erfindungsgemässen Optimierungsverfahrens werden alle an der Zahnradpumpe vorgesehenen Gleitlager getrennt optimiert.

Eine erfindungsgemässe Zahnradpumpe zeichnet sich nach dem kennzeichnenden Teil von Anspruch 5 aus, bevorzugte Ausführungsvarianten nach den Ansprüchen 6 bis 8.

Die Erfindung wird anschliessend beispielsweise anhand einer Figur erläutert.

Diese zeigt:

Einen Querschnitt durch ein erfindungsgemässes Lager der Welle einer erfindungsgemässen Zahnradpumpe.

Im Gehäuse 1 der Zahnradpumpe ist, drehfest, ein Lagerkörper 3 eingelassen. Innerhalb des Lagerkörpers 3 sitzt eine, wie mit α dargestellt, verdrehbare Lagerbüchse 5 mit Schmiernut 7. Die Lagerbüchse 5 ist in Richtung der Rotorenachse A, d.h. axial, gesichert. Eine Betätigungsanordnung 9, wie beispielsweise ein radial durch Lagerkörper 3 und Gehäuse 1 nach aussen ausragender Hebel, oder eine mit einem Ritzel lagerstirnseitig greifende Verzahnung an der Lagerbüchse 5 ermöglichen, die Lagerbüchse 5, mindestens in Grenzen, gemäss α zu verschwenken.

In einer bevorzugten Ausführungsform wird, wie mit dem Sensor 11 schematisch dargestellt, die Lagertemperatur im Lagerspalt zwischen Lagerbüchse 5 und (nicht dargestellter) Welle gemessen. Das von der Lagertemperatur abhängige Signal wird als gemessene Regelgrösse X an einer Vergleichseinheit 13 mit einem SOLL-Wertsignal bzw. einer Führungsgrösse W verglichen, und in Abhängigkeit der resultierenden Regeldifferenz Δ wird über einen Regler 15 der motorische Antrieb 17 für die Schwenkstellung der Büchse 5 betätigt.

Bevorzugterweise wird weiter die Führungsgrösse W in Abhängigkeit der Zahnradpumpen-Drehzahl n und/oder der Druckdifferenz Δp zwischen einlassseitigem Druck und auslassseitigem Druck an der Zahnradpumpe geführt.

Erhöht sich beispielsweise die Lagertemperatur ϑ_{L} und überschreitet den SOLL-Wert W, so wird die Schmiernut 7 durch Verstellung des Winkels α in Drehrichtung der Zahnradpumpe verschoben. Damit verkürzt sich die Strecke zwischen Nut und engstem Querschnitt; letzterer bleibt im wesentlichen raumfest bei konstant gehaltenen sonstigen Randbedingungen. Weil sich bei zu hoher Temperatur und mithin abnehmender Schmiermediumsviskosität die Stelle der geringsten Spalthöhe im Lager in Drehrichtung der Pumpe verschiebt, womit die Fliesswege zwischen Schmiernut 7 und Stelle engsten Spaltes zunehmen, damit auch die Scherbelastung des Schmiermediums und dessen Temperatur, wird, durch die erwähnte geregelte Nachführung von α in Pumpendrehrichtung, der vom Schmiermedium zwischen Schmiernut 7 und genannter Stelle kleinster Spaltbreite zu durchfliessende Weg verringert und damit die Fliessdistanz, entlang welcher das Schmiermedium Scherkräften ausgesetzt ist. Damit nimmt die Temperatur wieder ab und damit die Viskosität zu.

Aufgrund unterschiedlicher Lagerlasten und Lagertemperaturen, die aus den Eigenheiten des Aufbaus der Zahnradpumpe resultieren, aber auch aufgrund auftretender Störgrössen, welche bei allen beispielsweise vier vorgesehenen Rotorlagern unterschiedlich sind, z.B. aufgrund unterschiedlicher Wärmeabflüsse, werden bevorzugterweise, bei erfindungsgemässer Ausgestaltung aller Rotorlager, alle unabhängig voneinander gestellt bzw. geregelt.

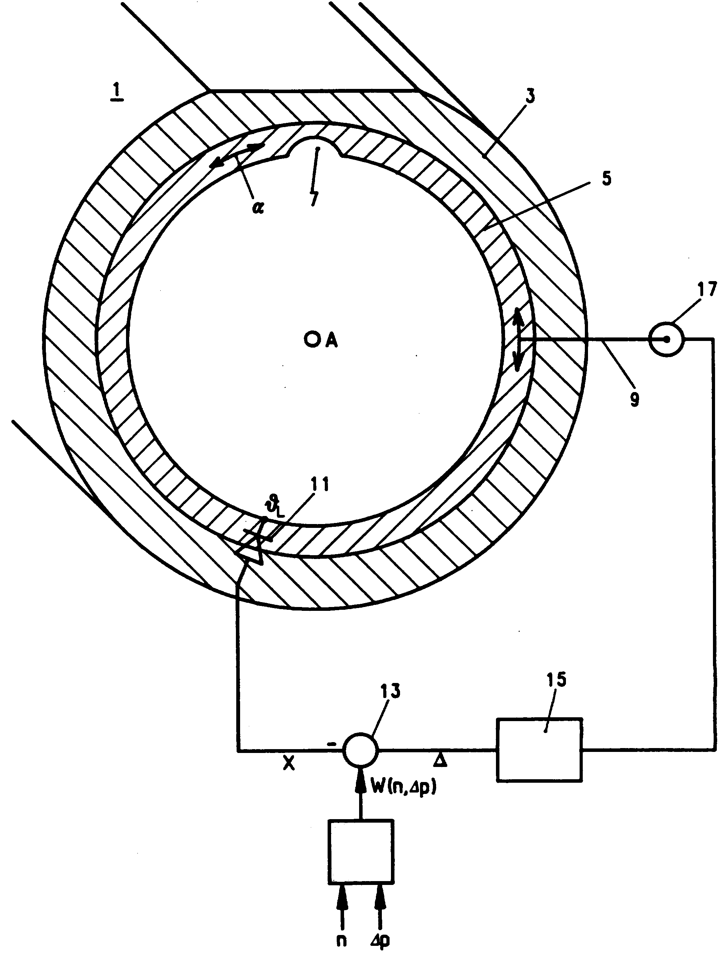

## Patentansprüche

1. Verfahren zur betriebsabhängigen Optimierung der Lagerung eines fördermediumgeschmierten Gleitlagers mit Schmiernut eines Zahnradpumpenrotors, dadurch gekennzeichnet, dass man die Schmiernutlage durch Schwenken um die Gleitlagerachse (A) verstellt.

2. Verfahren nach Anspruch 1, dadurch gekennzeichnet, dass die Lagertemperatur (ϑ_{L}) als gemessene Regelgrösse erfasst wird, mit einem SOLL-Wert (W) verglichen wird und nach Massgabe des Vergleichsresultates (Δ) in regelndem Sinne die Schwenklage (α) der Schmiernut (7) verstellt wird.

3. Verfahren nach einem der Ansprüche 1 oder 2, dadurch gekennzeichnet, dass die Schwenklage (α) der Schmiernut (7) in Funktion der Pumpendrehzahl (n) und/oder der Druckdifferenz (Δp) zwischen Einlauf und Auslauf der Zahnradpumpe gestellt wird, dass vorzugsweise, bei Lagertemperaturregelung, die Führungsgrösse (W) in Funktion von Drehzahl (n) und/oder der genannten Druckdifferenz (Δp) verstellt wird.

4. Verfahren nach einem der Ansprüche 1 bis 3, dadurch gekennzeichnet, dass an mindestens zwei Rotorlagern letztere unabhängig voneinander bezüglich Schwenklage der Schmiernut gestellt bzw. geregelt werden.

5. Zahnradpumpe mit mindestens einem mindestens einseitig fördermediumgeschmiert gleitgelagerten Zahnradrotor und mindestens einer im wesentlichen axial angeordneten Schmiernut (7) an der Gleitlager-Innenbohrung, dadurch gekennzeichnet, dass eine um die Lagerachse (A) verschwenkbare Lagerbüchse (5) mit der Nut (7) an ihrer Innenbohrung vorgesehen ist und mit einem von aussen betätigbaren Stellorgan (9, 17) für die Schwenklage der Lagerbüchse (5) in Wirkverbindung steht.

6. Zahnradpumpe nach Anspruch 5, dadurch gekennzeichnet, dass das Stellorgan (17) Stellglied in einem Regelkreis ist, bei dem vorzugsweise die Lagertemperatur als gemessene Regelgrösse (X) über eine SOLL/IST-Wert-Vergleichseinheit (13) auf das Stellglied (17) wirkt.

7. Zahnradpumpe nach einem der Ansprüche 5 oder 6, dadurch gekennzeichnet, dass ein Drehzahlnehmer für die Pumpendrehzahl und/oder ein Drucknehmer für den Differenzdruck zwischen Pumpeneinlass und -auslass vorgesehen ist und mindestens eines der Ausgangssignale der Drucknehmer auf das Stellglied (17) wirkt.

8. Zahnradpumpe nach einem der Ansprüche 5-7 mit zwei der fördermediumgeschmiert gleitgelagerten Rotorwellenlager, wobei beide unabhängig voneinander bezüglich der Schwenklage ihrer Schmiernut verstellbar sind bzw. geregelt sind.

## Revendications

1. Procédé pour optimiser en fonction du régime le montage d'un palier lisse d'un rotor de pompe à engrenages qui est lubrifié par le produit transporté et qui est pourvu d'une rainure de lubrification, caractérisé en ce qu'on règle la position de la rainure de lubrification grâce à un pivotement autour de l'axe (A) du palier lisse.

2. Procédé selon la revendication 1, caractérisé en ce que la température de palier (ϑ_{L}) est détectée comme grandeur réglée mesurée et est comparée à une valeur de consigne (W), et en fonction du résultat de la comparaison (Δ), la position de pivotement (α) de la rainure de lubrification (7) est ajustée dans le sens d'une régulation.

3. Procédé selon la revendication 1 ou 2, caractérisé en ce que la position de pivotement (α) de la rainure de lubrification (7) est ajustée en fonction de la vitesse de pompe (n) et/ou de la différence de pression (Δp) entre l'entrée et la sortie de la pompe à engrenages, et de préférence en ce que lors d'un réglage de température de palier, la grandeur de référence (W) est ajustée en fonction de la vitesse (n) et/ou de ladite différence de pression (Δp).

4. Procédé selon l'une des revendications 1 à 3, caractérisé en ce que sur au moins deux paliers de rotors, les positions de pivotement respectives des rainures de lubrification desdits paliers sont ajustées ou réglées indépendamment l'une de l'autre.

5. Pompe à engrenages comportant au moins un rotor à engrenages monté au moins sur un côté dans des paliers lisses lubrifiés par le produit transporté, et au moins une rainure de lubrification (7) disposée globalement axialement, sur le perçage intérieur des paliers lisses, caractérisée en ce qu'un coussinet (5) pivotant autour de l'axe de palier (A) et comportant la rainure (7) sur son perçage intérieur est prévu et est en relation fonctionnelle avec un organe de réglage (9, 17) apte à être actionné de l'extérieur pour la position de pivotement du coussinet (5).

6. Pompe à engrenages selon la revendication 5, caractérisée en ce que l'organe de réglage (17) est un composant de réglage prévu dans un circuit régulateur avec lequel la température de palier agit de préférence comme grandeur réglée mesurée (X) sur l'organe de réglage (17) par l'intermédiaire d'une unité de comparaison valeur de consigne/valeur réelle (13).

7. Pompe à engrenages selon la revendication 5 ou 6, caractérisée en ce qu'il est prévu un capteur de vitesse pour la vitesse de la pompe et/ou un capteur de pression pour la pression différentielle entre l'entrée et la sortie de la pompe, et l'un au moins des signaux de sortie du capteur de pression agit sur l'organe de réglage (17).

8. Pompe à engrenages selon l'une des revendications 5 à 7, comportant deux des paliers d'arbre de rotor montés dans des paliers lisses lubrifiés par le produit transporté, dans laquelle les positions de pivotement respectives des rainures de lubrification des deux paliers sont ajustées ou réglées indépendamment l'une de l'autre.

## Claims

1. A method for an operation-dependent optimization of the mounting of a gear pump rotor slide bearing lubricated by the conveyed product and having a lubricating groove, characterised in that the position of the lubricating groove is adjusted by pivoting around the slide bearing axis (A).

2. The method according to claim 1, characterised in that the bearing temperature (ϑ_{L}) is detected as a measured controlled variable and is compared to a set value (W), and depending on the comparison result (Δ), the pivoting position (α) of the lubricating groove (7) is adjusted as a regulation.

3. The method according to claim 1 or 2, characterised in that the pivoting position (α) of the lubricating groove (7) is adjusted depending on the pump speed (n) and/or the pressure difference (Δp) between gear pump inlet and outlet, and preferably in that when the bearing temperature is controlled reference variable (W) is adjusted depending on the speed (n) and/or said pressure difference (Δp).

4. The method according to one of claims 1 to 3, characterised in that for at least two rotor bearings the respective pivoting positions of the lubricating grooves of said bearings are adjusted or controlled independantly.

5. A gear pump with at least one gear rotor mounted at least on one side in product lubricated slide bearings and with at least one lubricating groove (7) provided generally axially on the inner bores of the slide bearings, characterised in that a bearing bush (5) which is rotatable around the bearing axis (A) and which comprises the groove (7) on its inner bore is provided and is operatively connected to a control member (9, 17) which can be actuated from the outside for the pivoting position of the bearing bush (5).

6. The gear pump according to claim 5, characterised in that the control member (17) is a control element in a regulator circuit in which the bearing temperature preferably acts on the control member (17) as a measured controlled variable (X) through a set/actual value comparison unit (13).

7. The gear pump according to claim 5 or 6, characterised in that a speed sensor for the pump speed and/or a pressure sensor for the differential pressure between the pump inlet and outlet are provided and at least one of the pressure sensor output signals acts on the control member (17).

8. The gear pump according to one of claims 5 to 7, comprising two of the rotor shaft bearings mounted in product lubricated slide bearings, whereby the respective pivoting positions of the lubricating grooves of both bearings are adjustable or controlled independantly.
